# EUROPEAN PATENT SPECIFICATION

(11) **EP 1 280 643 B1**
(45) Date of publication and mention of the grant of the patent: **17.09.2003**
(21) Application number: 00927722.9
(22) Date of filing: 05.05.2000
(51) Int. Cl.: B29C 45/16

(54) **MOULD FOR THE PRODUCTION OF PLASTIC CAPS WITH GASKET**
FORM ZUR HERSTELLUNG VON KUNSTSTOFFVERSCHLÜSSEN MIT DICHTUNG
MOULE PERMETTANT DE PRODUIRE DES BOUCHONS EN PLASTIQUE DOTES D'UN JOINT D'ETANCHEITE

(43) Date of publication of application: 05.02.2003
(73) Proprietor: GEFIT S.p.A., 15100 Alessandria (IT)
(72) Inventor: CARUANA, Alfonso, I-15068 Pozzolo Formigaro (IT)
(74) Representative: Long, Giorgio
(86) International application number: IT0000172
(87) International publication number: WO01085424

(56) References cited:
- EP-A- 0 688 652
- FR-A- 2 593 148
- GB-A- 2 297 711
- US-A- 4 803 031
- US-A- 5 447 674
- PATENT ABSTRACTS OF JAPAN vol. 9, no. 114 (M-380), 18 May 1985 (1985-05-18) -& JP 60 000912 A (TAISEI KAKOU KK), 7 January 1985 (1985-01-07)
- PATENT ABSTRACTS OF JAPAN vol. 14, no. 536 (M-1052), 27 November 1990 (1990-11-27) -& JP 02 227228 A (NISSEI PLASTICS IND CO), 10 September 1990 (1990-09-10)

## Description

The present invention relates to a mould for the production of plastic caps with gasket for containers in general such as, for example, bottles, flasks and jars and, in particular, to a mould comprising a hollow element in which a moulding chamber is formed, a cavity for the supply of thermoplastic material, a ring and a core.

The present invention also relates to a method of producing plastic caps with gasket for containers in general such as, for example, bottles, flasks and jars.

It is known that there are basically two methods of producing plastic caps with gasket.

The first method consists of a first step in which the cap and the corresponding gasket are formed separately and a second step for fitting the gasket in the cap. This method generally provides for the injection-moulding of a plastic cap in a suitable mould, the moulding of the gasket in a mould other than that used for the production of the cap and, finally, for the fitting of the gasket in the cap which is performed manually or with the aid of suitable devices.

The second method consists of the formation of the gasket directly in the cap. Once the cap has been formed by means of a suitable mould, a certain quantity of plastics material is heated so as to be rendered fluid and is deposited inside the cap at the level of its top. A punch is then inserted in the cap to form the gasket. The gasket is thus applied directly to the top of the cap in the form of a plastics film which adheres firmly to the top.

However, the above-mentioned methods of producing plastic caps with gasket have some disadvantages.

With regard to the first method, it should be noted that two separate moulds are required, one for moulding the cap and one for moulding the corresponding gasket. Moreover, means are required for fitting the gasket in the cap, or the two pieces must be fitted together manually.

This system therefore involves high investment costs and a certain degree of complexity of the apparatus. In addition, the finished part is constituted by two distinct components, which meets with ever less approval by the purchasers.

The second method eliminates the step of fitting two pieces together, and also leads to a certain degree of simplification of the production apparatus. This translates into an improvement in the production cycle in terms of times. Moreover, since the cap produced by this method no longer consists of two separate components, it meets with greater approval by customers.

The above-mentioned method nevertheless involves the use of a conventional mould or punch for forming a cap and a separate punch for forming the gasket. As a result, the apparatus is still complex and bulky and is constructed in a manner suitable for and limited to the specific method described above.

There is consequently a great need to provide a method and respective apparatus for the production of plastic caps with gasket which solves the problems of the prior art, particularly with regard to practicality of use and productivity.

The problem upon which the present invention is based is therefore that of devising a mould for the production of plastic caps with gasket which has structural and functional characteristics such as to satisfy the above-mentioned requirements and at the same time to prevent the problems of moulds for the production of plastic caps with gasket of the prior art.

This problem is solved by a mould and by a method for the production of plastic caps with gasket as recited in the appended claims.

Further characteristics and advantages of the mould and of the method for the production of plastic caps with gasket according to the present invention will become clear from the following description of some preferred embodiments thereof, given by way of non-limiting example with reference to the appended drawings, in which:
Figure 1 is an exploded, schematic cross-sectional view of the mould according to the invention,
Figure 2 is a schematic cross-sectional view of a first variant of a detail of the mould of Figure 1,
Figure 3 is a schematic cross-sectional view of a detail of a mould according to the priort art,
Figure 4 is a schematic cross-sectional view of the mould of Figure 1, in a first condition of use,
Figure 5 is a schematic cross-sectional view of the mould of Figure 1, in a second condition of use,
Figure 6 is a perspective view of a second variant of a detail of the mould according to the invention, in a first condition of use,
Figure 7 is a perspective view of a detail of the mould of Figure 6, in a second condition of use,
Figure 8 is a schematic cross-sectional view of the mould of Figure 6, in a first condition of use,
Figure 9 is a schematic cross-sectional view of the mould of Figure 6, in a second condition of use,
Figure 10 is a schematic cross-sectional view of a third embodiment of a detail of the mould, in a first condition of use,
Figure 11 is a schematic cross-sectional view of a detail of the mould of Figure 10, in a second condition of use,
Figure 12 is a schematic cross-sectional view of a fourth variant of a detail of the mould, in a first condition of use,
Figure 13 is a schematic cross-sectional view of a detail of the mould of Figure 12, in a second condition of use.

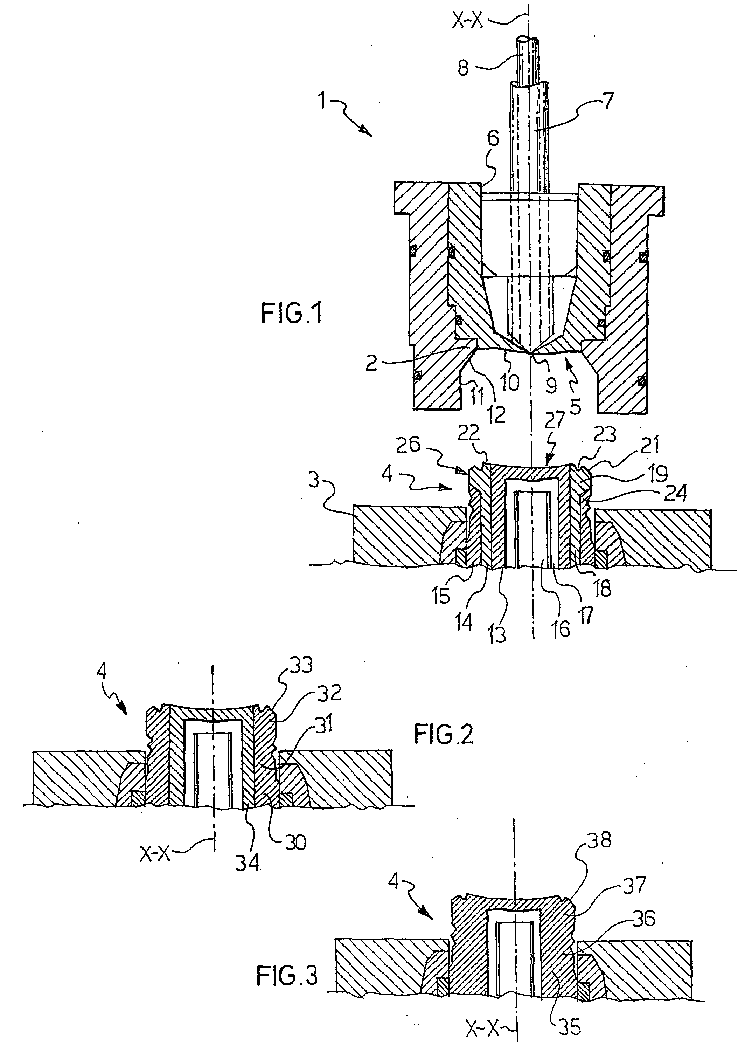

With reference to Figures 1, 4 or 5, a mould for the production of plastic caps with gasket according to the present invention is generally indicated 1. The apparatus which operates the mould 1 will not be described below since it is widely known in the art.

The mould 1 comprises a hollow or female element 2, a core or male'element 4, and a ring 3.

The hollow element 2 has a moulding cavity 5 which constitutes the moulding chamber for the formation of the gasket and of the cap. The hollow element 2 also comprises a housing 6 for two injectors 7 and 8 for supplying the plastics material, which are arranged coaxially and communicating with the moulding cavity 5 by means of a single orifice 9 for the injection of the plastics material.

The moulding cavity 5 comprises an end 10, a substantially cylindrical side wall 11, and a connecting region 12 between the end and the side wall. According to a preferred embodiment shown in the drawing 1, the orifice 9 is positioned in the centre of the end 10 of the moulding cavity 5.

The core 4 (of which only the end portion is shown in the drawing 1) comprises three coaxial elements movable relative to one another along a common longitudinal axis X-X, that is, an inner element 13, an intermediate element 14, and an outer element 15.

Housed inside the substantially cylindrical inner element 13 are a rising duct 16 and a downward duct 17 through which a coolant fluid can flow.

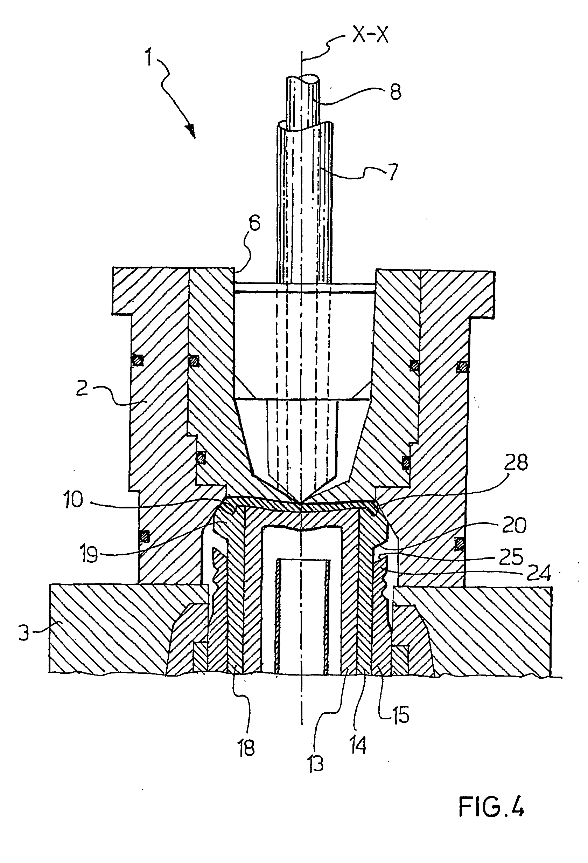

The intermediate element 14 is disposed coaxially outside the inner element 13. In particular, it comprises a body 18 and an end portion 19 which has a larger diameter than the body and is connected thereto by means of a shoulder 20 (Figure 4).

The end portion 19 also has an outer annular rim 21 and an upper annular rim 22. The outer annular rim 21 is such as to engage the wall of the connecting region 12 between the end 10 and the side wall 11 of the moulding chamber 5 when the mould is in the gasket-moulding stage. If the connecting region 12 has a frustoconical shape, the outer annular rim 21 will therefore preferably have a complementary frustoconical shape.

The upper annular rim 22 of the end portion 19 preferably also comprises an annular groove 23 for forming an annular lip projecting from the gasket.

The outer element 15 is disposed coaxially outside the intermediate element 14. The outer element 15 has an externally threaded end portion 25 for forming the threaded skirt of the cap.

Moreover, as also shown in Figure 4, the end portion 24 of the outer element 15 has an upper annular rim 25 shaped so as to be complementary with the shoulder 20 of the head end 19 of the intermediate element 14 and thus to be able to engage it during the cap-forming stage.

The intermediate element 14 and the outer element 15 also have a cooling system which is preferably formed outside the outer element 15. This system, which is not shown, consists of a space which is provided around the outer element 15 and in which a coolant fluid can flow.

In particular, the space may be formed between an inner bush, positioned in contact with the outer element 15 and an outer bush which surrounds the inner bush.

The two bushes, that is, the inner bush and the outer bush, may extend approximately as far as the moulding chamber when the mould 1 is in the working condition.

The ring 3 is constituted substantially by a plate having a central hole with cylindrical walls of a diameter such as to engage for sliding with the core 4 towards the hollow element 2 and to abut the lower wall of the hollow element 2 in a leaktight manner when the mould 1 is in the working condition.

The ring 3 serves to form the locking ring of a cap.

The operation of the mould 1 described above provides basically for the following steps: forming the gasket, setting of the gasket, forming the cap, setting of the cap, and release of the finished cap with the gasket. The gasket-forming and cap-forming steps take place by the injection of suitable thermoplastics material through the injectors 8 and 7, respectively, and through the orifice 9.

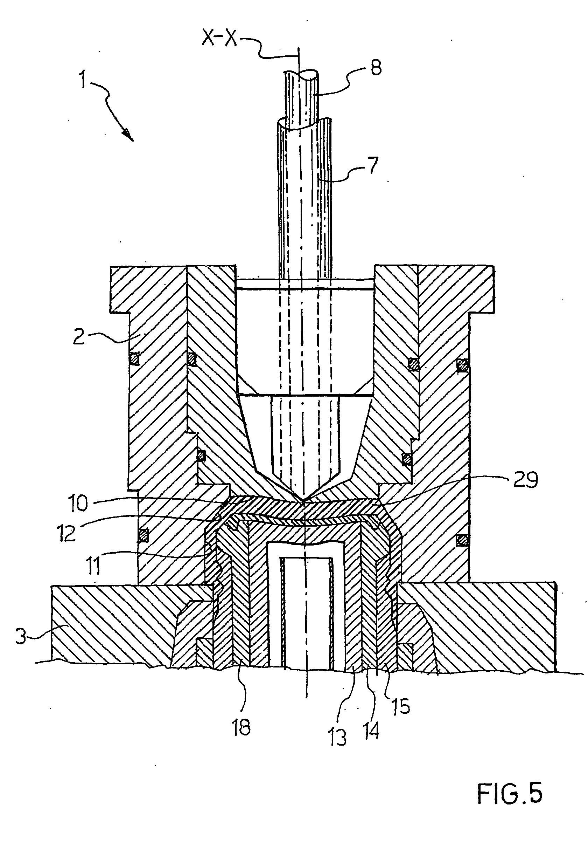

During the injection and setting steps, the moulding cavity 5 houses the head end 26 of the core 4, whilst the ring 3 engages the lower wall of the hollow element 2, as shown in Figures 4 and 5.

However, as will be described further below, a space which constitutes the actual moulding chamber is left between the upper surface 27 of the core 4 and the end 10 of the moulding cavity 5.

The gasket-forming step consists of the injection of a first type of thermoplastic material, preferably polyethylene, into the moulding cavity 5 and of subsequent cooling of the core 4.

With reference to Figure 4, the ring 3 and the core 4 are first of all moved along the axis X-X towards the hollow element 3 so that the former abuts the hollow element 2 and the latter has its head end 26 housed in the moulding cavity 5. The inner element 13 and the intermediate element 14 are then moved together further along the axis X-X towards the end 10 of the moulding cavity 5 until the outer annular rim 21 of the end portion 19 of the intermediate element 14 abuts the connecting region 12 of the moulding chamber 5.

In this position, the upper surface 27 of the core 4 defines the gasket-forming chamber 28. In Figure 4, this forming chamber 28 is hatched for greater clarity.

Injection takes place by means of the injector 8 disposed inside the coaxial injector 7.

The setting step then takes place; during this step a coolant fluid is caused to flow in the manner of a fountain through the rising duct 16 and the downward duct 17 of the inner element 12 and, at the same time, through the space disposed outside the outer element 15.

Upon completion of the gasket-cooling step, the intermediate element 14 is retracted from the moulding cavity 5 until the shoulder 20 engages the upper annular rim 25 of the outer element 15.

During this movement, the gasket formed will remain adhering to the upper surface 27 of the core 4 as a result of the restrained coupling formed between the projecting lip of the gasket and the groove 23. Other systems such as, for example, knurling formed on the upper surface 27, may similarly be provided for restraining the gasket on the surface.

As shown in Figure 5, during this step, the shoulder 20 of the end portion 19 of the intermediate element 14 will engage the upper annular rim 25 of the end portion 24 of the outer element 15.

A continuous outer surface for forming the skirt and the top of the cap is thus created between the intermediate element 14 and the outer element 15, that is, the junction between these elements does not form projections, steps and/or cracks.

Moreover, the outer annular rim 21 of the intermediate element 14 no longer engages the surface of the connecting region 12 of the moulding cavity 5. The cap-forming chamber 29 is thus created between the core 4, the ring 3 and the inner surface of the moulding cavity 5. In Figure 5, the forming chamber 29 is hatched for greater clarity.

At this point, the forming chamber 29 can receive thermoplastic material of a second type, preferably polypropylene heated so as to be rendered fluid, for the formation of the cap.

This takes place by injection of the plastics material by means of the injector 7 disposed coaxially outside the injector 6.

It should be noted that the mould 1 is still closed since neither the outer element 15 nor the ring 3 have been moved from the initial position of closure of the mould.

Naturally, as shown in Figure 5, this latter injection fills both the end 10 and the side 11 of the moulding cavity 5 so as to form the top and the threaded skirt of the cap, respectively.

Moreover, a portion of the plastics material injected is superimposed on the gasket already formed, causing partial fusion thereof. After setting, the gasket thus remains fixed to the top of the cap.

Setting takes place in the same way as described for the gasket-forming step.

Finally, the mould 1 is opened and the step of releasing the finished cap takes place by ejection of the cap from the core 4 by the advance of the inner element 13 towards the hollow element 2.

It is now clear from the foregoing description that the concept upon which the present invention is based is that of being able to use a single mould to produce both the gasket and its cap. This concept is realized by a core which, by two axial movements brought about inside the moulding cavity, forms firstly a gasket-forming chamber and subsequently a cap-forming chamber.

The mould and the method according to the present invention in fact avoid the complexity and space requirement of a second mould or of a second punch for forming the gasket.

As a result, the cap-forming and gasket-forming steps are also accelerated since the steps take place in close succession.

It has in fact been calculated that the duration of the production cycle for a cap with gasket according to the present invention is reduced by at least approximately 50% in comparison with the production cycle according to the prior art. This signifies a surprising increase in productivity which may even reach approximately 60%.

Moreover, the above-described mould can also advantageously be adapted to existing apparatus.

Naturally, different variants of the above-described mould may be provided.

In particular, as shown in Figure 2, the mould according to the present invention may be provided with a core constituted by two cylindrical elements, that is, an inner element and an outer element, instead of three.

In fact, the outer element 30 of Figure 2 corresponds to the formation of the intermediate and outer elements 14 and 15 of Figure 1 as a single piece. The outer element 30, which comprises a body 31 and an end portion 32 with a rim 33 will be movable axially between a first position in which the rim 33 defines a gasket-forming chamber by abutting the walls of the moulding cavity 5, particularly the connecting region 12, and a second position, to which it is retracted along the axis X-X and in which the rim 33 no longer abuts the walls of the moulding cavity 5 and therefore no longer closes the moulding cavity 5, defining the cap-forming chamber.

The inner element 34, which corresponds to the inner element 13 of Figure 1, will follow these two movements, cooperating in the formation firstly of the gasket-forming chamber and subsequently of the cap-forming chamber. Moreover, when the mould opens upon completion of the cap-forming process, the inner element 34 will be advanced relative to the outer element 30 so as to push the cap out of the mould.

According to the prior art , shown in Figure 3, the core 4 is constituted by a single element 35 comprising a body 36 and an end portion 37 with an outer annular rim 38, corresponding to the formation of the inner, intermediate and outer elements 13, 14 and 15 of Figure 1 as a single piece.

The movements of the element 35 will be identical to those described with reference to the intermediate element 14. The difference in comparison with the embodiments described above relates to the way in which the finished cap is released from the mould since, in this case, release devices known in the art will be provided.

According to a second and a third variant, it is also possible to produce a cap with a gasket comprising means for anchoring the gasket to the cap.

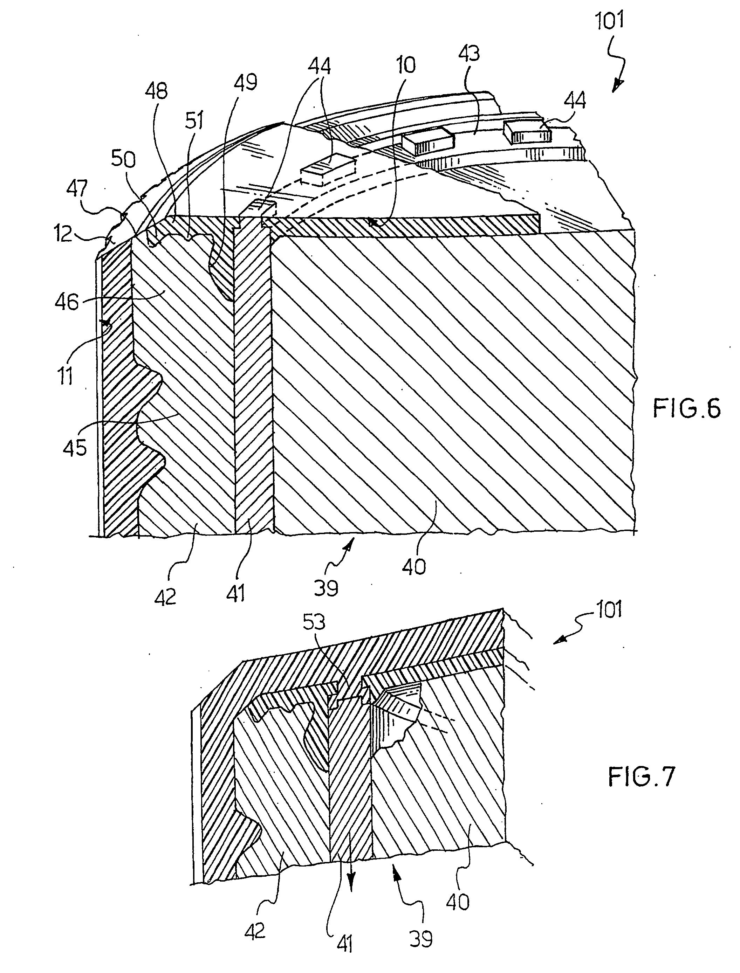

The second variant of the present invention will now be described with reference to Figures 6 to 9, in which parts in common with the previous embodiments are indicated by the same reference numerals and will not be described further.

In Figures 6 and 7, the mould 101 has a core 39 comprising an inner element 40 wholly similar to the inner element 13 of Figure 1, an intermediate element 41, and an outer element 42.

The intermediate element 41 is a hollow cylinder open at its two ends and disposed coaxially outside the inner element 40. As best shown in Figure 6, the intermediate element 41 has, on its upper annular surface which constitutes its rim, a circular series of projections 44 intercalated with transverse recesses 43 at regular intervals.

The projections 44 have a width less than the width of the upper annular surface of the intermediate element 41 and the projections 44 are arranged in substantially centred positions thereon. The projections 44 are preferably substantially rectangular; more generally, they may be of different shapes.

In other words, the projections 44 form a crenellation, the projecting portions of which are distributed in a circular arrangement and are separated by spaces arranged at substantially regular intervals.

The outer element 42 is a hollow cylinder which is also open at its two ends and is disposed coaxially outside the intermediate element 41. The outer element 42 has a body 45 and a head end 46 having an outer annular rim 47 and an upper annular rim 48.

The outer annular rim 47 is such as to engage the wall of the connecting region 12 between the end 10 and the side wall 11 of the moulding chamber 5 when the mould is in the gasket-moulding stage, as described fully above.

The upper annular rim 48 has an inner recess 49 which cooperates with the outer wall of the intermediate element 41 to create an annular recess suitable for forming the projecting annular lip of the gasket. The upper annular rim 48 preferably also has a first groove 50 formed at the base of the outer annular rim 47 and a second groove 51 positioned between the recess 49 and the first groove 50. The first and second grooves serve to form a circular outer edge and a circular tooth-shaped element of the gasket, respectively, in order to improve its sealing against the upper rim of the neck of a bottle.

The operation of the variant of the invention just described will now be described.

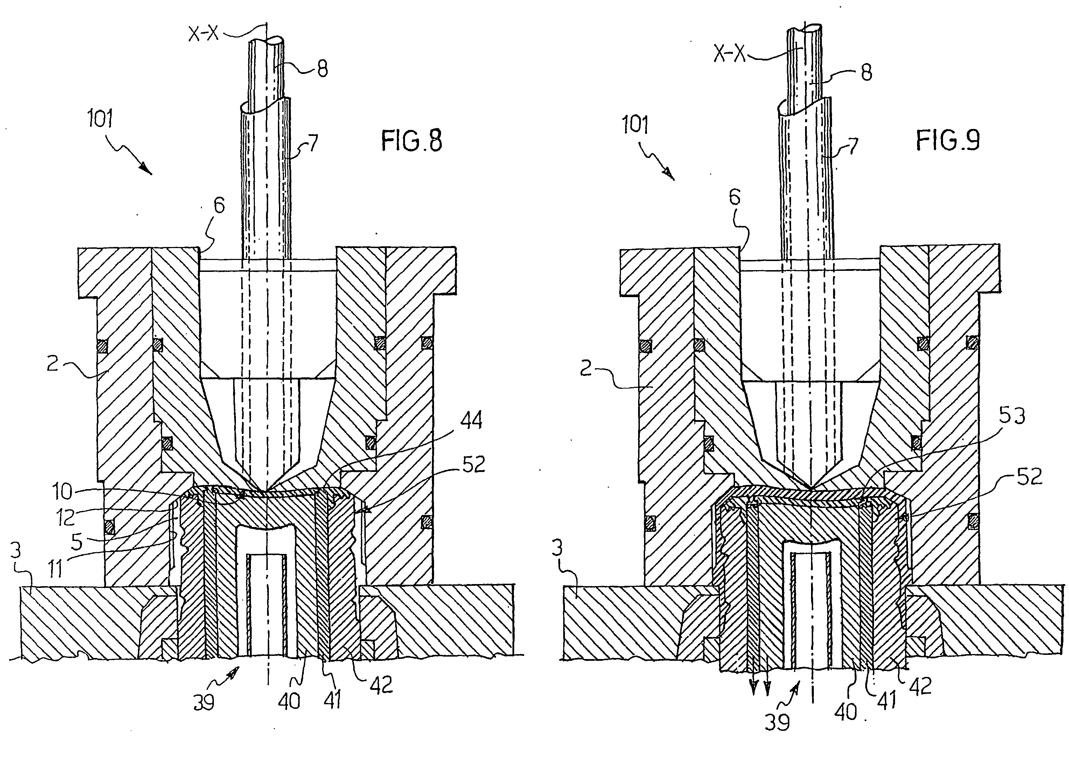

In Figure 8, the core 39 is fitted with its head end 52 inside the moulding cavity 5 so that the outer element 42 abuts the inner wall of the connecting region 12 between the end 10 and the side wall 11 of the moulding cavity. In this position, the intermediate element 41 is in abutment with the end 10 by means of the projections 44, whilst the inner element 40 is disposed a predetermined distance from the end 10.

At this point, the thermoplastic material for forming the gasket can be injected as explained fully above.

Naturally, in this case, the fluid thermoplastic material will fill firstly the space formed between the upper surface of the inner element 40 and the end 10 of the moulding cavity 5 and, subsequently, the space defined by the end 10, by the inner wall of the connecting region 12, and by the outer element 42, through the recesses 43.

The gasket just formed is then set as already described fully above.

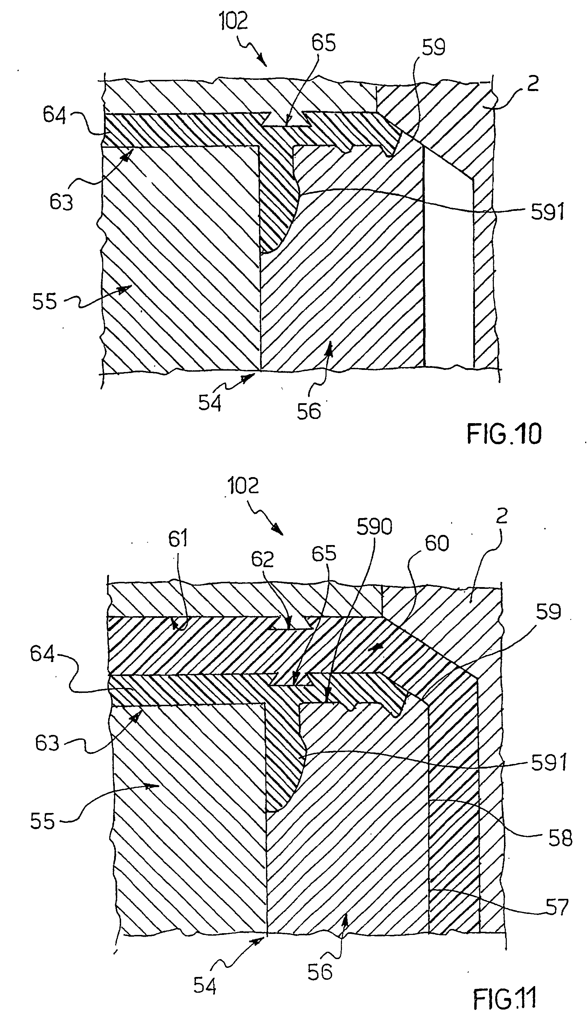

All three of the inner, intermediate and outer elements 40, 41 and 42 are then retracted from the end 10 of the moulding cavity 5 so as to create the cap-forming chamber, as shown in Figure 9.

It should be mentioned that, as described for the previous embodiments, the ring 3 abuts the moulding cavity 5 in order to close the cavity in collaboration with the outer element 42 and, at the same time, to form the security ring of the cap.

Prior to the injection of the thermoplastic material, the intermediate element 41 is retracted further relative to the inner and outer elements 40 and 42 so as to create an empty space 53 which extends through the thickness of the gasket.

The empty space 53 will necessarily have a shape substantially complementary to that of the upper surface of the intermediate element 41.

At this point, the thermoplastic material for forming the cap can be injected. Naturally, this fluidized material will fill the space defined by the end 10, by the side wall 11, by the connecting region 12, and by the head ends of the inner, intermediate and outer elements 40, 41 and 42.

The thermoplastic material will also fill the space 53.

Subsequent setting of the cap takes place as described above.

The creation of the space 53 thus clearly has the purpose of enabling a type of firm engagement to be formed by shaped coupling between the top of the cap and the gasket.

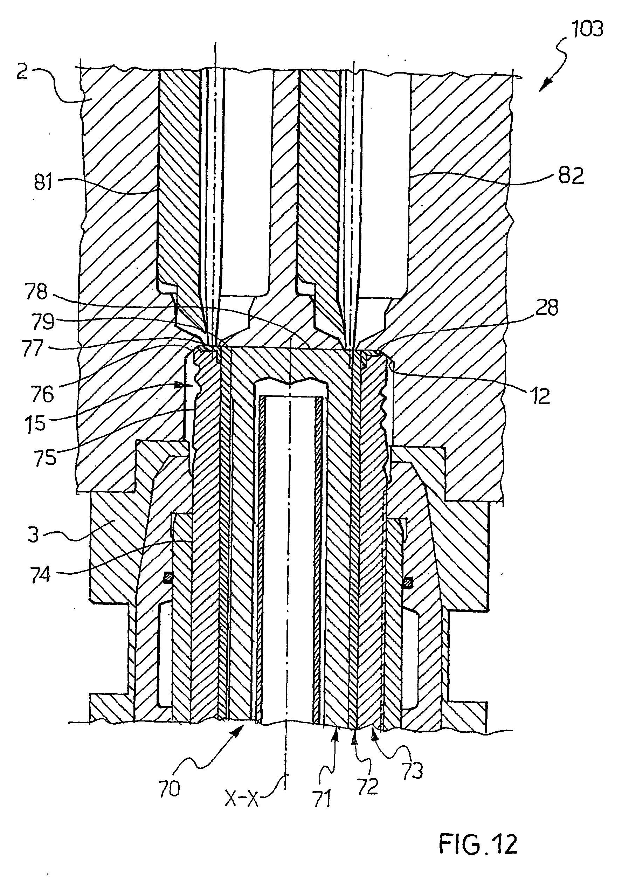

According to a third variant of the present invention, as shown in Figures 10 and 11, the mould 102 comprises a core 54 constituted by an inner element 55 and an outer element 56, arranged coaxially. The outer element has a body 57 and an end portion 58, the outer portion 58 having an outer annular rim 59 and an upper annular rim 590.

The upper annular rim 590 preferably comprises a groove 591 identical to the groove 49 of the outer element 42 of the mould 101 of Figure 6.

Moreover, the moulding cavity 60 has an end 61 having an annular projection 62 with a dovetail-shaped cross-section. This projection 62 faces towards the inside of the moulding cavity.

Figure 10 shows the position of the mould during the formation of the gasket, in which the head end 63 of the core 54 is disposed inside the moulding cavity 60. The gasket, as well as the cap, are formed as described fully above.

The gasket 64 will thus have a recess 65 of a shape complementary to that of the projection 62.

During the cap-moulding step, as shown in Figure 11, the recess 65 will be filled by a portion of the material of the top of the cap, thus forming a firm shaped coupling with the gasket 64.

According to a variant (not shown) of this latter arrangement, the moulding cavity 60 may have an annular groove with a dovetail-shaped cross-section, formed in the end 61.

Naturally, in this case, the means for anchoring the gasket to the cap are in reversed positions in comparison with those just described above. In fact, the projections 62 of Figure 10 extend from the gasket and engage complementary recesses formed in the thickness of the top of the cap.

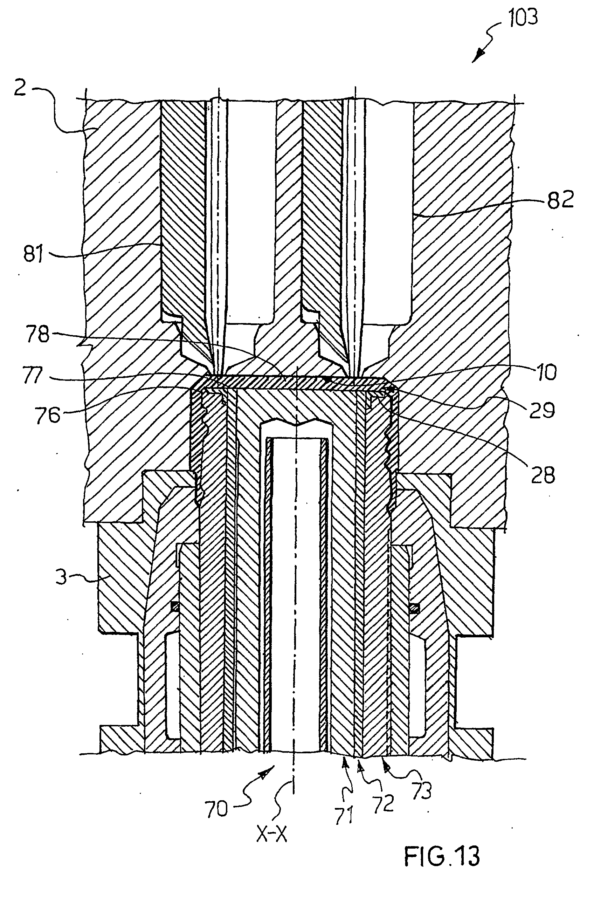

According to a fourth variant of the present invention, as shown in Figures 12 and 13, the mould 103 comprises a core 70 constituted by an inner element 71, an intermediate element 72, and an outer element 73, arranged coaxially.

Parts common with the previous embodiments are indicated by the same reference numerals and will not be described further.

The outer element 73 has a body 74 and an end portion 75, the end portion 75 having an outer annular rim 76 and an upper annular rim 77.

In particular, the shape of the end portion 75 is substantially identical to that described with reference to the embodiment of Figure 6 and preferably has a groove 750 substantially identical to the groove 49 shown in Figure 6, for the formation of the projecting annular lip of the gasket.

Moreover, the inner and intermediate elements 71 and 72 have respective substantially flat upper surfaces 78 and 79 so as to form an abutment with the end 10 of the moulding cavity 5 of the mould 103.

The moulding cavity 5 is also in communication with two separate injectors 81 and 82 through respective orifices.

In particular, the orifice of the injector 81 is positioned in the region of the upper annular rim 77 of the outer element 73 and the orifice of the injector 82 is positioned in the region of the upper surface of the inner element 71.

In Figure 12, the mould 103 is disposed with the end portion 75 of the core 70 inserted in the moulding cavity 5 in a manner such that the outer annular rim 76 of the outer element 73 is in abutment with the connecting region 12, as described fully above.

Moreover, the upper surfaces 78 and 79 of the inner and intermediate elements 71 and 72, respectively, are in abutment with the end 10 of the moulding cavity 5.

Clearly, in this position, the gasket-forming chamber 28 is reduced to an annular portion defined on the outside by the upper annular rim 77 of the outer element 73, at the top by the end 10 of the moulding cavity 5, and on the inside by the intermediate element 72.

The thermoplastic material is then injected by the injector 81 and is cooled as described fully above.

During the cap-forming step, as shown in Figure 13, the inner, intermediate and outer elements 71, 72 and 73 are retracted from the moulding cavity 5 together so as to create the cap-forming chamber 29.

In particular, the annular gasket formed during the previous step, which is shown hatched in Figure 13 for greater clarity, remains on the upper annular rim 77 of the outer element 73.

At this point, the thermoplastic material is injected to form the cap by means of the injector 82.

The thermoplastic material is then cooled as described above.

In this latter embodiment, the injectors of the thermoplastic material are arranged adjacent one another instead of coaxially, but may be disposed in other relative positions, on the basis of specific requirements.

The mould according to the present invention may undergo variations of shape on the basis of contingent requirements. For example, the thread of the outer element may have one start or several starts.

Moreover, it is also possible to provide a single injector supplied firstly with a first type of thermoplastic material and subsequently with a second type of thermoplastic material, for the moulding of the gasket and of the cap, respectively.

The externally-positioned cooling system may be replaced by a circuit consisting of a helical duct recessed in the outer lateral surface of the intermediate element so that the coolant fluid also passes over the inner lateral surface of the outer element. The above-mentioned circuit will be provided with seals to prevent leakage of coolant fluid between the intermediate and outer elements.

The mould may also be of a size such as to produce caps of variable diameter, according to requirements.

In particular, with the mould according to the present invention, it is possible to produce caps for containers in general such as, for example, bottles for drinks, flasks, and jars for preserves.

The material of which the mould is manufactured may be metals, light alloys, models suitably reinforced with fusible alloys and covered with metals deposited by sputtering, and yet further materials suitable for particular situations.

The moulds may be of the type with two plates or of the type with three plates.

Moreover, the thermoplastic materials used for forming the cap and the corresponding gasket may vary according to requirements or particular preferences.

The mould according to the present invention may preferably comprise an operating and control unit (not shown) for measuring and controlling the distance between the end and the core during the various steps of the moulding of the cap with gasket.

As can be appreciated from the foregoing description, the mould and the method for the production of the plastic cap with gasket according to the invention satisfy the requirements referred to in the introductory portion of this description and at the same time overcome the disadvantages of the moulds and of the methods of the prior art.

Naturally, in order to satisfy contingent and specific requirements, an expert in the art may apply to the above-described mould and method for the production of plastic caps with gasket many modifications and variations all of which, however, are included within the scope of the invention as defined by the following claims.

## Claims

1. A mould (1; 101; 102; 103;) for the production of plastic caps-with gasket, comprising a hollow element (2) having a housing (6) for means (7, 8; 81, 82) for supplying thermoplastic material, and a moulding cavity (5; 60) comprising an end (10; 61), a side wall (11), and a connecting region (12) between the end and the side wall, a ring (3), and a core (4; 39; 54; 70) having a head end (26; 52; 63; 75) and a substantially cylindrical lateral surface, wherein the distance between the end (10; 61) and the head end (26; 52; 63; 75) is variable along a common longitudinal axis (X-X) between a first position, in which the core (4; 39; 54; 70) is in abutment with the walls of the moulding cavity (5; 60), the first position defining a chamber (28) for forming a gasket for a cap, and a second, retracted position which defines a chamber (29) for forming a cap,
**characterised in that**
the core (4; 39; 54; 70) comprises at least two elements (14; 30; 42; 56; 73) with a body (18; 31; 45; 57; 74) and an end portion (19; 32; 46; 58; 75) having an outer annular rim (21; 33; 47; 59; 76) for abutting the connecting region (12) between the end (10; 61) and the side wall of the moulding cavity (5; 60), said at least two elements being (4; 54) an inner element (34; 55) housed coaxially and slidably in an outer element (30; 56), and the inner and outer elements being movable along a longitudinal axis (X-X).

2. A mould (1; 101; 103) for the production of plastic caps with gasket according to Claim 1, comprising an inner element (13; 40; 71) disposed coaxially and slidably inside an intermediate element (14; 41; 72), the intermediate element being disposed coaxially and slidably inside an outer element (15; 42; 73), the inner element (13; 40; 71), the intermediate element (14; 41; 72), and the outer element (15; 42; 73) being slidable along a longitudinal axis (X-X).

3. A mould (1) for the production of plastic caps with gasket according to Claim 2, in which the intermediate element (14) has an end portion (19) with a larger diameter than the body (18), the end portion (19) adjoining the body (18) by means of a shoulder (20).

4. A mould (1) for the production of plastic caps with gasket according to Claim 3, in which the upper annular rim (22) of the outer element (15) is complementary with the shoulder (20) of the head end portion (19) of the intermediate element (14).

5. A mould (1) for the production of plastic caps with gasket according to any one of Claims 1 to 4, in which the upper surface (27) of the core (4) has an annular groove (23) for the formation of an annular lip-projecting from the gasket.

6. A mould (101; 102; 103) for the production of plastic caps according to Claim 1, in which the upper annular rim (48; 590; 77) of the at least one element (42; 56; 73) has a groove (49; 591; 750) for the formation of an annular lip projecting from the gasket.

7. A mould (101) for the production of plastic caps with gasket according to Claim 2, in which the intermediate element (41) comprises, on its upper annular surface, projections (44) intercalated with recesses (43).

8. A mould (103) for the production.of plastic caps with gasket according to Claim 2, in which the intermediate element (72) has a substantially flat upper annular surface (79) which can abut the end (10) of the moulding cavity (5).

9. A mould (102) for the production of plastic caps with gasket according to Claim 1, in which the end (61) of the moulding cavity (5) comprises an annular, dovetail-shapedprojection (62).

10. A mould (1; 101; 102; 103) for the production of plastic caps with gasket according to Claim 1, comprising an operating and control unit for measuring and controlling the distance between the cylindrical core (4; 39; 54; 70) and the end (10; 61).

11. A mould (1; 101; 102) for the production of plastic caps with gasket according to Claim 1, in which the means (7, 8) for supplying thermoplastic material comprise two coaxial injectors (7, 8) disposed along the axis (X-X).

12. A mould (103) for the production of plastics caps with gasket according to Claim 8, in which the means (81, 82) for supplying thermoplastic material comprise two substantially parallel injectors (81, 82) disposed along the axis (X-X), the orifice of one injector (81) being positioned in the region of the upper annular rim (77) of the outer element (73), whilst the orifice of the other injector (82) is positioned in the region of the upper rim (78) of the inner element (71).

13. A method of producing plastic caps with gasket, comprising, in succession, the steps of:
- providing a mould according to any one of claims 1 to 12,
- positioning the core (4, 39; 54; 70) inside the moulding cavity (5; 60) so as to define the chamber (28) for forming the gasket,
- heating the appropriate thermoplastic material to its melting point,
- injecting the molten thermoplastic material into the chamber (28) for forming the gasket by means of a first injector (7; 81),
- cooling the gasket until the thermoplastic material has set,
- repositioning the core (4; 39; 54; 70) inside the moulding cavity (5; 60) so as to define the chamber (29) for forming a cap,
- heating the appropriate thermoplastic material to its melting point,
- injecting the molten thermoplastic material into the chamber (29) for forming the cap by means of a second injector (8; 82),
- cooling the cap until the thermoplastic material has set,
- opening the mould (1; 101; 102; 103),
- releasing the cap with gasket moulded by the mould (1; 101; 102; 103).

14. A method of producing plastic caps with gasket according to Claim 13, in which:
a) the step of positioning the core (4) inside the moulding cavity (5) so as to define the chamber (28) for forming the gasket provides for the inner and intermediate elements (13, 14) to be advanced together until they abut the wall of the moulding cavity (5), and
b) the step of repositioning the core (4) inside the moulding cavity (5) so as to define the chamber (28) for forming a cap provides for the inner and intermediate elements (13, 14) to be retracted together until the shoulder (20) engages the upper annular rim (25).

15. A method of producing plastic caps with gasket according to Claim 13, in which:
a) a mould in accordance with Claim 8 is provided,
b) the step of positioning the core (39) inside the moulding cavity (5) so as to define the cavity (28) for forming the gasket provides for the inner, intermediate and outer elements (40, 41, 42) to be advanced in a manner such that the intermediate and outer elements (41, 42) are in abutment with the wall of the moulding cavity (5) whilst the inner element (40) is positioned a predetermined distance from the end (10) of the moulding cavity (5), and
c) the step of repositioning the core (39) inside the moulding cavity (5) so as to define the chamber (29) for forming a cap provides for the inner, intermediate and outer elements (40, 41, 42) to be retracted together, and also provides for a further retraction of the intermediate element (41) relative to the inner and outer elements (40, 42).

16. A method of producing plastic caps with gasket according to Claim 13, in which:
a) a mould in accordance with Claim 8 is provided,
b) the step of positioning the core (70) inside the moulding cavity (5) so as to define the chamber (28) for forming the gasket provides for the inner, intermediate and outer elements (71, 72, 73) to be advanced in a manner such that the intermediate and inner elements (72) and (71) are in abutment with the end (10) of the moulding cavity (5) whilst the outer element (73) is in abutment with the connecting region (12) of the moulding cavity (5), and
c) the step of repositioning the core (70) inside the moulding cavity (5) so as to define the chamber (29) for forming a cap provides for the inner, intermediate and outer elements (71, 72, 73) to be retracted together.

## Patentansprüche

1. Form (1; 101; 102; 103) zur Herstellung von Kunststoffverschlüssen mit einer Dichtung, wobei die Form ausgerüstet ist mit einem Hohlelement (2), das ein Gehäuse (6) für eine Einrichtung (7, 8; 81, 82) zum Zuführen eines thermoplastischen Materials aufweist, und einem Formhohlraum (5; 60) mit einem Ende (10; 61), einer Seitenwand (11) und einem Verbindungsbereich (12) zwischen dem Ende und der Seitenwand, einem Ring (3) sowie einem Kern (4; 39; 54; 70) mit einem Kopfende (26; 52; 63; 75) und einer im wesentlichen zylindrischen Seitenoberfläche, wobei der Abstand zwischen dem Ende (10; 61) und dem Kopfende (26; 52; 63; 75) entlang einer gemeinsamen Längsachse (X-X) zwischen einer ersten Position, in welcher der Kern (4; 39; 54; 70) an den Wänden des Formhohlraums (5; 60) anliegt, wobei die erste Position eine Kammer (28) zum Formen einer Dichtung für einen Verschluß festlegt, und einer zweiten, zurückgezogenen Position, die eine Kammer (29) zum Ausbilden eines Verschlusses festlegt, **dadurch gekennzeichnet, daß** der Kern (4; 39; 54; 70) mindestens zwei Elemente (14; 30; 42; 56; 73) mit einem Körper (18; 31; 45; 57; 74) und einem Endabschnitt (19; 32; 46; 58; 75) aufweist, der mit einem äußeren ringförmigen Rand (21; 33; 47; 59; 76) zum Anlegen an den Verbindungsabschnitt (12) zwischen dem Ende (10; 61) und der Seitenwand des Formhohlraums (5; 60) versehen ist, wobei die mindestens zwei Elemente (4; 54) ein inneres Element (34; 55), das coaxial und verschiebbar in einem äußeren Element (30; 56) aufgenommen ist, darstellen, sowie das innere und das äußere Element entlang einer Längsachse (X-X) bewegbar sind.

2. Form (1; 101; 103) für die Herstellung von Kunststoffverschlüssen mit einer Dichtung gemäß Anspruch 1, mit einem inneren Element (13; 40; 71), das coaxial und innerhalb eines Zwischenelements (14; 41; 72) verschiebbar ist, wobei das Zwischenelement coaxial und innerhalb eines äußeren Elements (15; 42; 73) verschiebbar ist sowie das innere Element (13; 40; 71), das Zwischenelement (14; 41; 72) und das äußere Element (15; 42; 73) entlang einer Längsachse (X-X) verschiebbar sind.

3. Form (1) zur Herstellung von Kunststoffverschlüssen mit einer Dichtung gemäß Anspruch 2, bei der das Zwischenelement (14) einen Endabschnitt (19) mit einem größeren Durchmesser als jenem des Körpers (18) aufweist, wobei der Endabschnitt (19) mittels einer Schulter (20) dem Körper (18) benachbart ist.

4. Form (1) zur Herstellung von Kunststoffverschlüssen mit einer Dichtung gemäß Anspruch 3, bei welcher der obere ringförmige Rand (22) des äußeren Elements (15) zur Schulter (20) des Kopfendeabschnitts (19) des Zwischenelements (14) komplementär ist.

5. Form (1) zur Herstellung von Kunststoffverschlüssen mit einer Dichtung gemäß einem der Ansprüche 1 bis 4, bei der die obere Oberfläche (27) des Kerns (4) eine Ringnut (23) zur Bildung einer ringförmigen Lippe, die von der Dichtung vorsteht, aufweist.

6. Form (101; 102; 103) zur Herstellung von Kunststoffverschlüssen nach Anspruch 1, bei welcher der obere ringförmige Rand (48; 590; 77) des mindestens einen Elements (42; 56; 73) eine Nut (49; 591; 750) zur Bildung einer ringförmigen Lippe, die von der Dichtung vorsteht, aufweist.

7. Form (101) zur Herstellung von Kunststoffverschlüssen mit einer Dichtung gemäß Anspruch 2, bei der das Zwischenelement (41) an seiner oberen ringförmigen Oberfläche Vorsprünge (44) aufweist, die in Ausnehmungen (43) eingelagert sind.

8. Form (103) zur Herstellung von Kunststoffverschlüssen mit einer Dichtung gemäß Anspruch 2, bei der das Zwischenelement (72) eine im wesentlichen flache obere ringförmige Oberfläche (79) aufweist, die an dem Ende (10) des Formhohlraums (5) anliegen kann.

9. Form (102) zur Herstellung von Kunststoffverschlüssen mit einer Dichtung gemäß Anspruch 1, bei der das Ende (61) des Formhohlraums (5) einen ringförmigen schwalbenschwanzförmigen Vorsprung (62) aufweist.

10. Form (1; 101; 102; 103) zur Herstellung von Kunststoffverschlüssen mit einer Dichtung nach Anspruch 1, mit einer Betriebs- und Steuereinheit zum Messen und Steuern des Abstands zwischen dem zylindrischen Kern (4; 39; 54; 70) und dem Ende (10; 61).

11. Form (1; 101; 102) zur Herstellung von Kunststoffverschlüssen mit einer Dichtung gemäß Anspruch 1, bei der die Vorrichtung (7, 8) zum Zuführen von thermoplastischem Material zwei coaxiale Injektoren (7, 8) aufweist, die entlang der Achse (X-X) angeordnet sind.

12. Form (103) zur Herstellung von Kunststoffverschlüssen mit einer Dichtung nach Anspruch 8, bei der die Vorrichtung (81, 82) zum Zuführen von thermoplastischem Material zwei im wesentlichen parallele Injektoren (81, 82) aufweist, die entlang der Achse (X-X) angeordnet sind, wobei die Öffnung des einen Injektors (81) im Bereich des oberen ringförmigen Rands (77) des äußeren Elements (73) und die Öffnung des anderen Injektors (82) im Bereich des oberen Rands (78) des inneren Elements (71) angeordnet ist.

13. Verfahren zum Herstellen von Kunststoffverschlüssen mit einer Dichtung, das der Reihe nach die folgenden Stufen beinhaltet:
- Bereitstellen einer Form nach einem der Ansprüche 1 bis 12;
- Anordnen des Kerns (4, 39; 54; 70) innerhalb des Formhohlraums (5; 60), um die Kammer (28) zum Ausbilden der Dichtung festzulegen;
- Erhitzen des geeigneten thermoplastischen Materials bis zu seinem Schmelzpunkt;
- Einspritzen des geschmolzenen thermoplastischen Materials in die Kammer (28) zum Ausbilden der Dichtung mittels eines ersten Injektors (7; 81);
- Abkühlen der Dichtung bis zum Härten des thermoplastischen Materials;
- Repositionieren des Kerns (4; 39; 54; 70) innerhalb des Formhohlraums (5; 60), um die Kammer (29) zum Ausbilden eines Verschlusses festzulegen;
- Erhitzen des geeigneten thermoplastischen Materials bis zu seinem Schmelzpunkt;
- Einspritzen des geschmolzenen thermoplastischen Materials in die Kammer (29) zum Ausbilden des Verschlusses mittels eines zweiten Injektors (8; 82);
- Abkühlen des Verschlusses, bis das thermoplastische Material gehärtet ist;
- Öffnen der Form (1; 101; 102; 103);
- Freigeben des Verschlusses mit der Dichtung, die mittels der Form (1; 101; 102; 103) gebildet worden ist.

14. Verfahren zum Herstellen von Kunststoffverschlüssen mit einer Dichtung gemäß Anspruch 13, worin
a) die Stufe des Positionierens des Kerns (4) innerhalb des Formhohlraums (5), um die Kammer (28) zum Ausbilden der Dichtung festzulegen, derart eingerichtet ist, daß das innere Element und das Zwischenelement (13, 14) zusammen vorwärts bewegt werden, bis sie an der Wand des Formhohlraums (5) anliegen, und
b) die Stufe des Repositionierens des Kerns (4) innerhalb des Formhohlraums (5), um die Kammer (28) zum Ausbilden eines Verschlusses festzulegen, derart eingerichtet ist, daß das innere Element und das Zwischenelement (13, 14) zusammen zurückgezogen werden, bis die Schulter (20) an dem oberen ringförmigen Rand (25) anliegt.

15. Verfahren zum Herstellen von Kunststoffverschlüssen mit einer Dichtung gemäß Anspruch 13, worin
a) eine Form gemäß Anspruch 8 bereitgestellt wird,
b) die Stufe des Positionierens des Kerns (39) innerhalb des Formhohlraums (5), um den Hohlraum (28) zum Ausbilden der Dichtung festzulegen, derart eingerichtet ist, daß das innere Element, das Zwischenelement und das äußere Element (40, 41, 42) in einer solchen Weise vorwärts bewegt werden, daß das Zwischenelement und das äußere Element (41, 42) an der Wand des Formhohlraums (5) anliegen, während das innere Element (40) in einem vorgegebenen Abstand von dem Ende (10) des Formhohlraums (5) positioniert wird, und
c) die Stufe des Repositionierens des Kerns (39) innerhalb des Formhohlraums (5), um die Kammer (29) zum Ausbilden eines Verschlusses festzulegen, derart eingerichtet ist, daß das innere Element, das Zwischenelement und das äußere Element (40, 41, 42) zusammen zurückgezogen werden, und auch zu einem weiteren zurückziehen des Zwischenelements (41) bezüglich des inneren Elements und des äußeren Elements (40, 42) ausgebildet ist.

16. Verfahren zum Herstellen von Kunstoffverschlüssen mit einer Dichtung nach Anspruch 13, worin
a) eine Form gemäß Anspruch 8 bereitgestellt wird,
b) die Stufe des Positionierens des Kerns (70) innerhalb des Formhohlraums (5), um die Kammer (28) zum Ausbilden der Dichtung festzulegen, derart eingerichtet ist, daß das innere Element, das Zwischenelement und das äußere Element (71, 72, 73) in einer solchen Weise vorwärts bewegt werden, daß das Zwischenelement und das innere Element (72, 71) an dem Ende (10) des Formhohlraums (5) anliegen, während das äußere Element (73) an dem Verbindungsbereich (12) des Formhohlraums (5) anliegt, und
c) die Stufe des Repositionierens des Kerns (70) innerhalb des Formhohlraums (5), um die Kammer (29) zum Ausbilden eines Verschlusses festzulegen, derart eingerichtet ist, daß das innere Element, das Zwischenelement und das äußere Element (71, 72, 73) zusammen zurückgezogen werden.

## Revendications

1. Moule (1 ; 101 ; 102 ; 103) destiné à la production de bouchons de matière plastique munis d'une garniture, comportant un élément creux (2) ayant un boîtier (6) destiné à un dispositif (7, 8 ; 81, 82) de transmission d'une matière plastique, et une cavité de moulage (5 ; 60) comprenant une extrémité (10 ; 61), une paroi latérale (11) et une région de connexion (12) placée entre l'extrémité et la paroi latérale, un anneau (3) et un noyau (4 ; 39 ; 54 ; 70) ayant une extrémité de tête (26 ; 52 ; 63 ; 75) et une surface latérale pratiquement cylindrique, dans lequel la distance comprise entre ladite extrémité (10 ; 61) et l'extrémité de tête (26 ; 52 ; 63 ; 75) est variable suivant un axe longitudinal commun (X-X) entre une première position, dans laquelle le noyau (4 ; 39 ; 54 ; 70) est en butée contre les parois de la cavité de moulage (5 ; 60), la première position délimitant une chambre (28) destinée à la formation d'une garniture pour un bouchon, et une seconde position rétractée qui délimite une chambre (29) de formation d'un bouchon,
**caractérisé en ce que** le noyau (4 ; 39 ; 54 ; 70) comporte au moins deux éléments (14 ; 30 ; 42 ; 56 ; 73) avec un corps (18 ; 31 ; 45 ; 57 ; 74) et une partie d'extrémité (19 ; 32 ; 46 ; 58 ; 75) ayant un rebord annulaire externe (21 ; 33 ; 47 ; 59 ; 76) destiné à être en butée contre la région de connexion (12) entre l'extrémité (10 ; 61) et la paroi latérale de la cavité de moulage (5 ; 60), les deux éléments au moins (4 ; 54) étant un élément (34 ; 55) logé coaxialement et de façon coulissante dans un élément externe (30 ; 56), et les éléments interne et externe étant mobiles le long d'un axe longitudinal (X-X).

2. Moule (1 ; 101 ; 103) de production de bouchons de matière plastique ayant une garniture selon la revendication 1, comprenant un élément interne (13 ; 40 ; 71) disposé axialement et de façon coulissante dans un élément intermédiaire (14 ; 41 ; 72), l'élément intermédiaire étant disposé coaxialement et de manière coulissante dans un élément externe (15 ; 42 ; 73), l'élément interne (13 ; 40 ; 71), l'élément intermédiaire (14 ; 41 ; 72) et l'élément externe (15 ; 42 ; 73) pouvant coulisser le long d'un axe longitudinal (X-X).

3. Moule (1) de production de bouchons de matière plastique avec une garniture selon la revendication 2, dans lequel l'élément intermédiaire (14) a une partie d'extrémité (19) de diamètre supérieur à celui du corps (18), la partie d'extrémité (19) étant adjacente au corps (18) avec interposition d'un épaulement (20).

4. Moule (1) de production de bouchons de matière munis d'une garniture selon la revendication 3, dans lequel le rebord annulaire supérieur (22) de l'élément externe (15) est complémentaire de l'épaulement (20) de la partie d'extrémité de tête (19) de l'élément intermédiaire (14).

5. Moule (1) de production de bouchons de matière plastique munis d'une garniture selon l'une quelconque des revendications 1 à 4, dans lequel la surface supérieure (27) du noyau (4) a une gorge annulaire (23) de formation d'une lèvre annulaire dépassant de la garniture.

6. Moule (101 ; 102 ; 103) de production de bouchons de matière plastique selon la revendication 1, dans lequel le rebord annulaire supérieur (48 ; 590 ; 77) d'au moins un élément (42 ; 56 ; 73) a une gorge (49 ; 591 ; 750) pour la formation d'une lèvre annulaire dépassant de la garniture.

7. Moule (101) de production de bouchons de matière plastique munis d'une garniture selon la revendication 2, dans lequel l'élément intermédiaire (41) comporte, à sa surface annulaire supérieure, des saillies (44) imbriquées avec des cavités (43).

8. Moule (103) de production de bouchons de matière plastique munis d'une garniture selon la revendication 2, dans lequel l'élément intermédiaire (72) a une surface annulaire supérieure pratiquement plate (79) qui peut être en butée contre l'extrémité (10) de la cavité de moulage (5).

9. Moule (102) de production de bouchons de matière plastique munis d'une garniture selon la revendication 1, dans lequel l'extrémité (61) de la cavité de moulage (5) comporte une saillie annulaire en queue d'aronde (62).

10. Moule (1 ; 101 ; 102 ; 103) de production de bouchons de matière plastique munis d'une garniture selon la revendication 1, comprenant une unité opérationnelle et de commande destinée à la mesure et au réglage de la distance comprise entre le noyau cylindrique (4 ; 39 ; 54 ; 70) et l'extrémité (10 ; 61).

11. Moule (1 ; 101 ; 102) de production de bouchons de matière plastique munis d'une garniture selon la revendication 1, dans lequel le dispositif (7, 8) destiné à transmettre la matière plastique comporte deux injecteurs coaxiaux (7, 8) disposés le long de l'axe (X-X).

12. Moule (103) de production de bouchons de matière plastique munis d'une garniture selon la revendication 8, dans lequel le dispositif (81, 82) destiné à transmettre la matière plastique comprend deux injecteurs pratiquement parallèles (81, 82) disposés le long de l'axe (X1 et X), l'orifice d'un injecteur (81) étant disposé dans la région du rebord annulaire supérieur (77) de l'élément externe (73), alors que l'orifice de l'autre injecteur (82) est positionné dans la région du rebord supérieur (78) de l'élément interne (71).

13. Procédé de production de bouchons de matière plastique munis d'une garniture, comprenant successivement les étapes suivantes :
la formation d'un moule selon l'une quelconque des revendications 1 à 12,
le positionnement du noyau (4, 39 ; 54 ; 70) dans la cavité de moulage (5 ; 60) pour la délimitation de la chambre (28) de formation de la garniture,
le chauffage de la matière plastique convenable à sa température de fusion,
l'injection de la matière thermoplastique fondue dans la chambre (28) pour la formation de la garniture à l'aide d'un premier injecteur (7 ; 81),
le refroidissement de la garniture jusqu'au durcissement de la matière thermoplastique,
le nouveau positionnement du noyau (4 ; 39 ; 54 ; 70) dans la cavité de moulage (5 ; 60) pour la délimitation de la chambre (29) de formation d'un bouchon,
le chauffage de la matière thermoplastique convenable à sa température de fusion,
l'injection de la matière thermoplastique fondue dans la chambre (29) pour la formation du bouchon à l'aide d'un second injecteur (8 ; 82),
le refroidissement du bouchon jusqu'au durcissement de la matière thermoplastique,
l'ouverture du moule (1 ; 101 ; 102 ; 103), et
la séparation du bouchon muni de la garniture, moulé par le moule (1 ; 101 ; 102 ; 103).

14. Procédé de production de bouchons de matière plastique munis d'une garniture selon la revendication 13, dans lequel :
a) l'étape de positionnement du noyau (4) dans la cavité de moulage (5) pour la délimitation de la chambre (28) destinée à former la garniture assure l'avance simultanée des éléments interne et intermédiaire (13, 14) jusqu'à ce qu'ils soient en butée contre la paroi de la cavité de moulage (5), et
b) l'étape de nouveau positionnement du noyau (4) dans la cavité de moulage (5) pour la délimitation de la chambre (28) pour la formation d'un bouchon provoque le recul ensemble des éléments interne et intermédiaire (13, 14) jusqu'à ce que l'épaulement (20) soit en coopération avec le rebord annulaire supérieur (25).

15. Procédé de production de bouchons de matière plastique munis de garniture selon la revendication 13, dans lequel :
a) un moule selon la revendication 8 est réalisé,
b) l'étape de positionnement du noyau (39) dans la cavité de moulage (5) pour la délimitation de la cavité (28) de formation de la garniture assure l'avance des éléments interne, intermédiaire et externe (40, 41, 42) de manière que les éléments intermédiaire et externe (41, 42) soient en butée contre la paroi de la cavité de moulage (5) alors que l'élément interne (40) est positionné à une distance prédéterminée de l'extrémité (10) de la cavité de moulage (5), et
c) l'étape de nouveau positionnement du noyau (39) dans la cavité de moulage (5) pour la délimitation de la chambre (29) de formation d'un bouchon assure le recul ensemble des éléments interne, intermédiaire et externe (40, 41, 42) et assure aussi le recul supplémentaire de l'élément intermédiaire (41) par rapport aux éléments interne et externe (40, 42).

16. Procédé de production de bouchons de matière plastique munis d'une garniture selon la revendication 13, dans lequel :
a) un moule est réalisé selon la revendication 8,
b) l'étape de positionnement du noyau (70) dans la cavité de moulage (5) afin que la chambre (28) de formation de la garniture soit délimitée assure l'avance des éléments interne, intermédiaire et externe (71, 72, 73) de manière que les éléments intermédiaire et interne (72 et 71) soient en butée contre l'extrémité (10) de la cavité de moulage (5) alors que l'élément externe (73) est en butée dans la région de raccordement (12) de la cavité de moulage (5), et
c) l'étape de nouveau positionnement du noyau (70) dans la cavité de moulage (5) pour la délimitation de la chambre (29) de formation d'un bouchon assure le recul ensemble des éléments interne, intermédiaire et externe (71, 72, 73).
